(19) Europäisches Patentamt
European Patent Office
Office européen des brevets

(11) Publication number: **0 618 268 A1**

(12) **EUROPEAN PATENT APPLICATION**

(21) Application number: **93200983.0**

(22) Date of filing: **02.04.93**

(51) Int. Cl.[5]: **C08L 77/02**, C08L 71/12, C08L 77/00

(43) Date of publication of application: **05.10.94 Bulletin 94/40**

(84) Designated Contracting States: **BE CH DE DK ES FR GB LI NL PT SE**

(71) Applicant: **ENICHEM S.p.A.**
**Piazza Repubblica, 16**
**I-20124 Milano (IT)**

(72) Inventor: **Pernice, Roberto**
**Via Carducci, 54**
**I-30171 Venice-Mestre (IT)**
Inventor: **Pippa, Roberto**
**Via Perosi 14**
**I-30033 Noale, Venice (IT)**
Inventor: **Moro, Alessandro**
**Via Molinella 37**
**I-30030 Cazzago di Pianiga, Venice (IT)**
Inventor: **Berto, Corrado**
**Via Del Vaso, 50**
**I-30031 Dolo, Venice (IT)**
Inventor: **Venti, Paolo**
**Via Andorra, 8**
**I-35020 Padova (IT)**

(74) Representative: **Fusina, Gerolamo et al**
**Ing. Barzanò & Zanardo Milano S.p.A,**
**Via Borgonuovo, 10**
**I-20121 Milano (IT)**

(54) **Thermoplastic composition based on polyphenylene ether and modified polyamide.**

(57) A thermoplastic composition having an excellent balance of mechanical and thermal properties, an improved impact strength, a good flowability in the molten state and a good processability, comprising:

- at least a polyphenylene ether resin (A);
- at least a modified polyamide (B) obtained by anionic polymerization of a omega-lactam in the presence of an organic diisocyanate, and, optionally,
- a further polymeric additive.

EP 0 618 268 A1

The present invention relates to a thermoplastic composition based on a polyphenylene ether and a modified polyamide.

More in particular, the present invention relates to a thermoplastic composition having a good balance of mechanical and thermal properties, an improved impact resistance, a high fluidity in the molten state and, therefore, a good processability, comprising a polyphenylene ether , a modified polyamide and, optionally, a further polymeric additive.

The polyphenylene ether resins (PPE), also known as polyphenylene oxide resins, represent a well known family of engineering polymers and are characterized by a good combination of thermal, mechanical and dielectrical properties within a wide temperature range. They are, moreover, selfextinguishing even if they are halogen free and do not produce particularly toxic smokes when they are exposed to the flame. This combination of properties makes the polyphenylene ether resins suitable for use in a wide number of applications by means of injection or extrusion molding techniques.

In spite of these numerous possible commercial applications of the polyphenylene ether resins (PPE), their utilization is limited due to their poor processability mainly attributable to the low fluidity in the molten state which can cause some difficulties during the extrusion and injection molding operations.

A further drawback is that the polyphenylene ether resins show a poor solvent resistance after molding and a low resiliency (IZOD), thus the use thereof for certain applications is further limited.

To improve these shortcomings it has been suggested to blend the polyphenylene ether resins with other polymers which possess said lacking properties.

Thus, for example, U.S. Patent No. 3,379,792 suggests to improve the fluidity of polyphenylene ether resins by adding a polyamide . According to the teachings of this patent, however, the blends are limited to a maximum polyamide concentration of 25% by weight, since higher amounts of polyamide involve delamination and a significant decay of the other physical-mechanical properties such as the resiliency, owing to the poor miscibility of the two polymers.

Apart from this teaching, it is known from the literature that polyphenylene ether resins and polyamide resins are not fully compatible with each other within a wide range of proportions and that poor properties and phase separation occur when the polyamide concentration is rather high.

It is also known from the literature that, for overcoming this drawback, substances capable of interacting with both the resins, generally said compatibilizing agents, are added to the mixtures of the two resins.

Thus, according to U.S. Patent No. 4,315,086 and the corresponding European Patent No. 24,120, compositions comprising polyphenylene ether and a polyamide, showing high resilience characteristics and excellent processability, may be prepared by mixing the two polymers in the molten state with from 0.01 to 30% by weight of a compound selected from the group consisting of: a) a liquid diene polymer; b) an epoxy compound and c) a compound wherein both (i) an ethylenic double bond C=C or a triple bond C=C, and (ii) a carboxy, anhydrido, amido, imido, carboxylic ester, amino or hydroxy group are present in the molecule.

Japanese published Patent Application No. 84/66452 describes polymeric compositions similar to the preceding ones wherein the polyphenylene ether has been pretreated with one of the above reported compounds a) to c), in the presence of a free radical initiator .

However, the resulting compositions do not exhibit an excellent balance of properties and, furthermore, the resilience improvements are not yet sufficient. With a view to further improving the characteristics thereof, it was proposed, in literature, that a rubber or an elastomeric polymer having a second order transition temperature (Tg) lower than 10°C should be added to the polyphenylene ether -polyamide-compatibilizing agent compositions.

U.S. Patent No. 4,315,086 proposes, to this purpose, to add natural rubbers, butadiene polymers, butadiene-styrene copolymers, isoprene polymers, butadiene-acrylonitrile copolymers, acrylic esters polymers, ethylene-propylene copolymers, ethylene-propylene-diene terpolymers, etc.

World Patent Application PCT/US/86/01511 and U.S. Patent No. 4,654,405 describe thermoplastic compositions comprising funzionalized polyphenylene ether , polyamide and an impact modifier such as, for example, a polystyrene-polybutadiene-polystyrene, three-block copolymer S-B-S.

World Patent Application PCT/US/87/00479 describes thermoplastic compositions comprising functionalized polyphenylene ether , polyamide and an impact modifier consisting of a selectively and partially hydrogenated two-block copolymer of the A-B type, wherein block A is a styrene polymer and block B is an ethylene-propylene polymer.

European Patent Application EP-A-236,596 describes a polymeric composition comprising a polyphenylene ether, a polyamide, an agent to improve the compatibility of the polyamide and the polyphenylene ether and an agent to improve the impact strength of the blend, which agent can be an ethylene-propylene copolymer or an ethylene-propylene-conjugated diene terpolymer on which a vinyl monomer

having an acid carboxylic group or a derivative thereof or an epoxy group has been grafted.

European Patent Application EP-A-270246 describes a thermoplastic composition based on a polyphenylene ether and a polyamide containing from 5 to 100 parts, with respect to 100 parts of the blend, of a copolymer consisting of an ethylene-alpha-olefin rubbery copolymer, an alkenyl aromatic compound and an unsaturated carboxylic acid or an anhydride thereof, which, not only is compatible with the composition of the two polymers, but also causes a remarkable improvement of the impact strength. For this purpose, the presence of the unsaturated carboxylic acid or of its anhydride is considered, in said patent, as absolutely necessary.

European Patent Application EP-A-211,201 describes polymerizable mixtures comprising a polyphenylene ether , an omega-lactam, a catalyst for the lactam anionic polymerization and a polymerization promoter. This latter is, preferably, the same polyphenylene ether functionalized at the chain ends by various groups containing ethero-atoms. The products obtained by the mixtures described in the Patent Application have a high content of PPE-polyamide copolymers. The preparation of the mixture, however, is very difficult, not only as far as the polyphenylene ether functionalization process is concerned, but especially owing to the poor solubility of the polyphenylene ether in the lactams, with consequent achievement of not homogeneous mixtures.

Object of the present invention is to solve the drawbacks shown by the compositions described in the above mentioned prior art.

The Applicant has now surprisingly found that by appropriately modifying the polyamides it is possible to obtain mixtures thereof with polyphenylene ether without the use of any compatibilizing agent.

Subject matter of the present invention is, therefore, a thermoplastic composition based on polyphenylene ether resin and polyamide having an excellent balance of mechanical and thermal properties, an improved impact strength, a good flowability in the molten state, and, therefore, a good processability comprising:

- at least a polyphenylene ether resin (A);
- at least a modified polyamide (B) obtained by anionic polymerization of a omega-lactam in the presence of an organic diisocyanate, and, optionally,
- a further polymeric additive.

The compositions of the instant invention comprise mixtures of a polyphenylene ether resin (A) and a polyamide (B) in any proportion. Generally, the polyphenylene ether resin (A) is present in an amount ranging between 5 and 95% by weight and, correspondingly, the polyamide (B) is present in an amount comprised between 95 and 5% by weight, with respect to the total weight of the two components (A) and (B).

Preferred compositions comprise from 25 to 75% by weight of polyphenylene ether resin and, correspondingly, from 75 to 25% by weight of polyamide, still with respect to the weights of both the resins.

The polyphenylene ether resins (A) used in the compositions of the present invention are a well known class of polymers. They are broadly utilized in the industry, especially as engineering polymers in appliances which require toughness and thermal stability.

These polyphenylene ether resins are polymers and copolymers which comprise a plurality of structural units having the following formula (I):

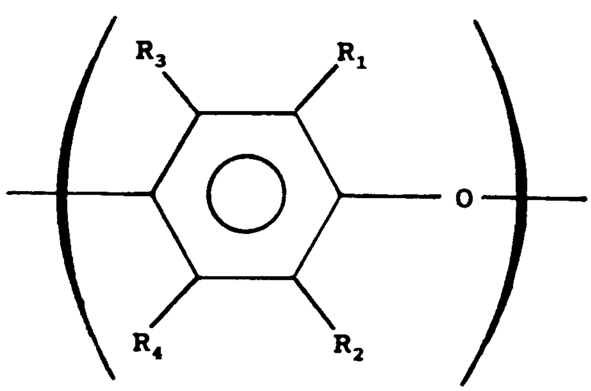

(I)

wherein $R_1$, $R_2$, $R_3$ and $R_4$, equal or different from each other, represent a hydrogen or halogen atom, or a substituted or non-substituted hydrocarbon radical, or an alkoxyl radical.

Examples of $R_1$, $R_2$, $R_3$ and $R_4$ are hydrogen, a halogen such as chlorine, bromine or fluorine, or a hydrocarbon radical containing from 1 to 18 carbon atoms such as for example an alkyl radical or a substituted alkyl radical such as methyl, ethyl, n- and iso-propyl, n-, sec- and tert- butyl, n-amyl, n-hexyl, 2,3-dimethylbutyl, chloro-ethyl, methoxycarbonylethyl, cyanoethyl, hydroxyethyl, phenylethyl, hydroxymethyl, or an aryl or substituted aryl radical such as, for example, phenyl, chlorophenyl, methylphenyl, dimethylphenyl, ethylphenyl, or a benzyl radical or an allyl radical, or, finally, an alkoxyl radical containing from 1 to 6 carbon atoms, such as methoxy, ethoxy, n- and iso-propoxy n-, iso- and tert- butoxy.

These polymers and the processes for preparing them are broadly described in literature. As an example, reference is made to U.S. Patent Nos. 3,226,361; 3,234,183; 3,306,874; 3,306,875; 3,257,357; 3,257,358; etc., the content of which is incorporated in the present specification as a reference.

Polyphenylene ether resins preferred in the present invention are those having following formula (II):

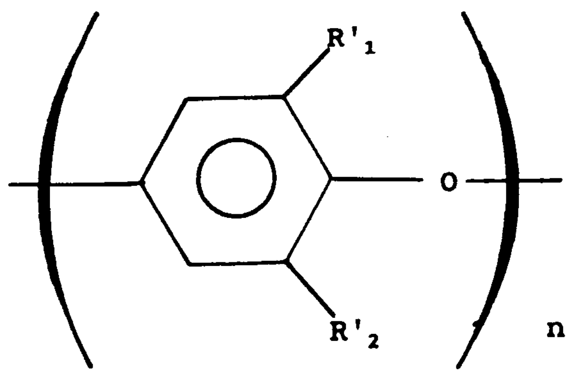

(II)

wherein $R'_1$ and $R'_2$, equal or different to each other, represent an alkyl radical containing from 1 to 4 carbon atoms and "n" is at least 50 and preferably comprised between 60 and 600.

Illustrative examples of polyphenylene ether s which are particularly suitable for the compositions of the present invention are:

- poly(2,6-dimethyl-1,4-phenylene)ether;
- poly(2,6-diethyl-1,4-phenylene)ether;
- poly(2-methyl-6-ethyl-1,4-phenylene)ether;
- poly(2,6-dipropyl-1,4-phenylene)ether;
- poly(2-ethyl-6-propyl-1,4-phenylene)ether and the like;

poly(2,6-dimethyl-1,4-phenylene)ether is particularly preferred.

The term "polyphenylene ether resin", whenever used in the present specification and in the claims, includes both the homopolymers and the copolymers containing the structural units of formula (I) indicated hereinbefore, such as, for example, the copolymers comprising units deriving from 2,6-dimethyl phenol and 2,3,6-trimethyl phenol; as well as the grafted copolymers prepared by grafting one or more vinyl monomers such as acrylonitrile or vinylaromatic compounds such as styrene or polymers such as polystyrene or elastomers onto the polyphenylene ether chain.

The polyphenylene ether resins generally have a average molecular weight, determined by gel permeation chromatography, ranging from 5,000 to 120,000, preferably higher than 20,000, and their inherent viscosity is higher than 0.1 dl/g and, very often, ranges from 0.30 to 0.90 dl/g (measured in chloroform at 23 °C).

These resins can be produced by oxidation of a phenol compound with oxygen or an oxygen-containing gas mixture, in the presence of a catalyst for the oxidative coupling. Any known catalyst suitable for the oxidation polymerization can be utilized. Generally they contain at least a compound of a transition metal such as copper, manganese or cobalt usually in combination with other types of catalytic compounds. Examples of suitable catalysts are the ones containing a cupreous or cupric salt such as, for example, a cuprous salt in combination with a tertiary amine and/or a secondary amine, such as, for example, copper(I)chloride-trimethylamine or copper(I)chloride-dibutylamine, or copper(I)chloride-pyridine, or copper(I)-acetate-triethylamine, or a cupric salt in combination with a tertiary amine and a hydroxide of an alkaline metal, such as, for example, copper(II)chloride-pyridine-potassium hydroxide. These catalysts are described, for example, in U.S. Patent Nos. 3,306,874; 3,914,266 and 4,028,341.

Another class of suitable catalyst are the ones containing manganese or cobalt, very often complexed with one or more chelating and/or complexing agents such as dialkylamines, alkanoamines, alkylenediamines, o-hydroxyaromatic aldehydes, o-hydroxyazo compounds, omega-hydroxyoximes, o-hydroxyaryloximes and beta-diketones. All these catalysts are well known in literature and are described, for examples, in U.S. Patent Nos. 3,956,242; 3,962,181; 3,965,069; 4,075,174; 4,093,595-8; 4,102,865; 4,184,034; 1,385,168; etc. the content of which is integral part of the present invention as a reference.

The modified polyamides (B) which are used for the object of the present invention are those which can be prepared by the anionic polymerization of a mixture comprising:

- at least a omega-lactam (i),
- an alkaline catalyst (ii), and
- an organic diisocyanate.

Omega-lactams (i), which can be utilized for the object of the present invention, are the compounds corresponding to the following formula (III):

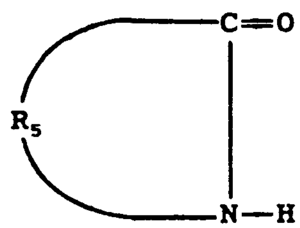

(III)

wherein $R_5$ is an alkylene radical containing from 2 to 18, preferably from 4 to 12, carbon atoms. Typical examples of omega-lactams suitable for the present invention are delta-valerolactam, epsilon-caprolactam, omega-capryllactam, omega-undecanelactam and omega-lauryllactam; epsilon-caprolactam and omega-lauryllactam are particularly preferred.

For the preparation of the polyamides of the instant invention, the various alkaline catalysts known in the art can be used such as, for example, Grignard reactives or alkaline or alkaline-earth metal lactamates, alcoholates, hydrides, hydroxides; however, sodium or potassium mono-bromide lactamates, conventionally used in solution in an omega-lactam, are preferred.

Particularly preferred solutions are those containing 15-25% by weight of sodium or potassium lactamate in the omega-lactam corresponding to the desired polyamide.

The catalyst (ii) is generally used in amounts ranging from 0.2 to 2.0 moles, preferably from 0.25 to 1.5 moles of alkaline compound per 100 moles of omega-lactam.

The organic diisocyanates (iii) which can be used for the preparation of the polyamides of the present invention are aliphatic, cycloaliphatic or aromatic compounds having the following general formula (IV):

$OCN-R_6-NCO$

wherein $R_6$ is an alkylene, cycloalkylene, alkylcycloalkylene, arylene, alkylarylene or arylalkylene group having from 2 to 30 carbon atoms.

The -NCO groups of the organic diisocyanates (iii) can be free or, preferably, blocked by reaction with an omega-lactam.

Typical aliphatic or cycloaliphatic diisocyanates are, for example, hexamethylenediisocyanate, 1,2- or 1,3- or 1,4-cyclohexanediisocyanate, isophoronediisocyanate, 1,3- or 1,4-bis(isocyanatemethyl)cyclohexane, ortho-, para-, or meta-xylilenediisocyanate, and like. Among the aliphatic diisocyanates hexamethylenediisocyanate is preferred.

Typical aromatic diisocyanates which can be utilized are those corresponding to the following general formula (V):

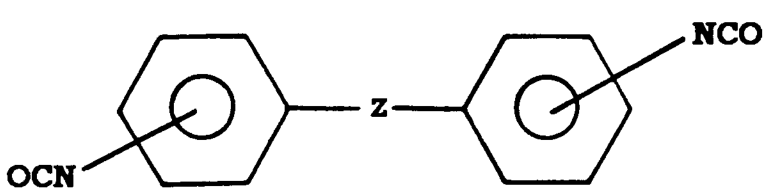

(V)

wherein Z can be $-SO_2-$,

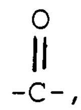

-S-, -O- or the group

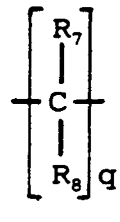

wherein $R_7$, $R_8$, which can be equal or different from each other, can be a hydrogen atom or an alkyl group containing from 1 to 4 carbon atoms, and "q" is 0 or an integer ranging from 1 to 4.

Other aromatic diisocyanates which can be utilized for the purposes of the present invention include: ortho-, meta- and para-phenylenediisocyanate, 2,4-toluenediisocyanate, 2,6-toluenediisocyanate and the several naphtalenediisocyanate isomers, etc.

Among the aromatic diisocyanates, 2,4'- and 4,4'-(diphenylemethane)diisocyanate (MDI) and 2,4- and 2,6-toluenedi-isocyanate (TDI) are preferred.

The term "organic diisocyanate", whenever used in the present invention, includes also the mixtures of the above reported diisocyanates, with one another and/or with lower amounts of mono- or polyisocyanates, in order to regulate, in this latter case, the end properties of the polyamide (B).

For the purposes of the present invention, the organic diisocyanate (iii) can be utilized as such or, preferably, with each -NCO group blocked by reaction with an omega-lactam which can be equal or different from the one corresponding to the polyamide (B). These diisocyanates blocked with omega-lactams are known and described, for example, in U.S.A Patent No. 3,304,291. They are excellent initiators of the lactam anionic polymerization, they are not as sensitive to the moisture and not as toxic as the free diisocyanates and can be easily prepared, for example, by dissolving a diisocyanate in a omega-lactam, preferably that one (i) corresponding to the polyamide (B), heated over the melting temperature.

The blocked organic diisocyanates as above obtained are generally not separated, but they are added to the polymerization mixture in the same omega-lactam solution.

The organic diisocyanate (iii) is generally used in amounts comprised between 0.1 and 5%, preferably between 0.5 and 3% by moles with respect to the total moles of omega-lactam. Wen the diisocyanate is used in amounts lower than 0.1%, an increasing of the residue monomer amount is observed at the end of the polymerization; while amounts higher than 5% can involve an excessive lowering of the polyamide molecular weight.

The polyamides (B) which can be used in the present invention can be prepared by anionic polymerization of the mixture comprising the above defined components (i), (ii) and (iii), by means of anyone of the known anionic polymerization processes of omega-lactams and, preferably, by means of bulk polymerization carried out at temperatures higher than the melting temperature of the omega-lactam (i) and, generally, comprised between 80 and 250 °C. The reaction can be carried out in inert atmosphere in a closed vessel or in continuous.

Copolyamides of two or more omega-lactams, or mixtures of two or more polyamides obtained as above described can be also utilized as polyamides suitable for the present invention.

The average molecular weight of the polyamides of the present invention is advantageously higher than 10,000, and preferably higher than 15,000 and up to 40,000, and the melting point thereof is preferably higher than 200 °C.

These polyamides are furthermore characterized by a low content of residual monomer, preferably lower than 2% by weight.

Particularly preferred polyamides are obtained by anionic polymerization, carried out between 100 and 250 °C, of epsilon-caprolactam in the presence of 4, 4'-di-phenylmethanediisocyanate having both the

-NCO groups blocked with epsilon-caprolactam and by using sodium or potassium caprolactamate as catalyst, said polyamides having an average molecular weight ranging from 15,000 to 40,000, a melting point higher than 200 °C and a residual monomer content lower than 2% by weight.

In the embodiment of the compositions of the present invention, it can be suitable and desirable to add a further polymeric additive in order to further improve the physical properties of the compositions, with particular reference to the impact resistance and processability thereof.

Specific examples of these polymeric additives include, among other additives, high, medium and low density polyethylene, linear low density polyethylene, polypropylene, poly(1-butene), propylene-ethylene copolymers, copolymers of ethylene with other copolymerizable monomers such as vinyl acetate, acrylic acid or methacrylic acid as well as the ester derivatives thereof, ionomer resins containing carboxylic side groups which can be wholly or partially neutralized with metal ions, polystyrene, ABS copolymer, styrene-acrylonitrile copolymer (SAN), styrene resins described in U.S.A. Patent No. 3,383,435 the content of which is integral part of the instant description as a reference .

Particularly suitable polymeric additives are the rubbery high-molecular weight polymeric modifiers, including natural and synthetic polymeric materials showing an elastic behaviour at room temperature. These rubbery modifiers can be homopolymers or copolymers, including statistic copolymers, block linear or radial copolymers, grafted polymers or copolymers, cross-linked copolymers, core-shell copolymers as well as combinations thereof.

Examples of rubbery polymeric modifiers are poly(methylmethacrylate-butadiene-styrene) linear copolymers or (vinylaromatic and/or acrylic polymer)-(conjugated polydiene) block copolymers of A-B and A-B-A types in the hydrogenated, partially hydrogenated or not-hydrogenated forms, such as polystyrene-polybutadiene, polystyrene-polyisoprene, poly-alpha-methylstyrene-polybutadiene diblock copolymers, or polystyrene-polybutadiene-polystyrene, polystyrene-polyisoprene-polystyrene, poly-alpha-methylstyrene-polyisoprene-poly-alpha-methylstyrene threeblock copolymers, as well as the polystyrene-poly(ethylene-propylene) block copolymers. Many of these elastomeric copolymers are available commercially, for example, from Phillips Petroleum under the tradename SOLPRENE$^R$,from SHELL Company under the tradenames CARIFLEX$^R$, KRATON D$^R$ or KRATON G$^R$,from Polichem Company under the tradename POLIGUM$^R$, from Exxon Company under the tradename VECTOR$^R$.

Other types of rubbery modifiers suitable for the preparation of the compositions of the present invention are polybutadiene, butadiene-styrene copolymers, poly(chlorobutadiene), ethylene-propylene copolymers (EPR), ethylene-propylene-(non conjugated diene) terpolymer (EPDM), or the core-shell graft copolymers having the core constituted by a conjugated diene and one or more shells polymerized thereon and deriving from a vinyl aromatic monomer and/or acrylic monomer alone or in combination with other vinyl monomers. Such core-shell copolymers are well known and available commercially with the tradenames PARALOID EXL 3386$^R$ and EXL 2607$^R$ of Rohm & Haas and described in U.S. Patent Nos. 3,808,180; 4,034,013; 3,096,202; 4,180,494 and 4,292,233, the content of which is integral part of the instant description as a reference.

Particularly interesting and advantageous results are achieved when the rubbery polymeric modifier is an olefinic elastomer containing grafted thereon a vinylaromatic polymer. It can be prepared by any method generally known for preparing graft copolymers such as, for example, by radicalic or anionic polymerization of a vinylaromatic compound in the presence of the olefinic elastomer, or by reaction between a vinylaromatic polymer or a prepolymer and the olefinic elastomer, either by means of free radical generator compounds, or by means of functional groups reactive to each other, previously introduced into the the polymeric chains. The radicalic polymerization of the vinylaromatic compound in the presence of the olefinic elastomer is the preferred grafting method.

The olefinic elastomer on which the vinylaromatic polymer is grafted, is a rubbery copolymer, having a Mooney viscosity ranging from 10 to 150 ML at 100 °C, of at least two different straight chain alpha-mono-olefins such as ethylene, propylene, butene-1, octene-1, and the like with at least another copolymerizable monomer, generally a polyene, and typically a non conjugated diene. Preferably, one of the alpha - mono-olefins is ethylene togheter with another alpha mono-olefin having a longer chain. The weight ratio of the ethylene with respect to the other alpha-mono-olefin in the rubbery copolymer is usually in the range of from 20/80 to 80/20. Particularly preferred copolymers are the ethylene-propylene-non conjugated diene terpolymer in which the non-conjugated diene can be cyclic or acyclic such as: 5-methylene-2-norbornene, 5-iso-propylidene-2-norbornene, 1,4-pentadiene, 1,4-hexadiene, 1,5-hexadiene, 1,5-heptadiene, 1,7,9-dodecatriene, methyl-1, 5-eptadiene, 2,5-norbornadiene, cyclo-1,5-octadiene dicyclopentadiene, tetrahydroindene, 5-methyl-tetrahydroindene, etc. The diene content ranges from about 2 to 20% by weight and, preferably, from 8 to 18% by weight of diene monomeric units in the rubbery terpolymer. Particularly interesting results are obtained by using a rubbery terpolymer having a Mooney viscosity, determined at

100 ° C, ranging from 30 to 90 ML, and a iodine number higher than 5, preferably ranging from 10 to 40.

The term "vinylaromatic compound", whenever used in the present specification and in the claims, comprises the ethylenically unsaturated compounds having the following general formula (VI):

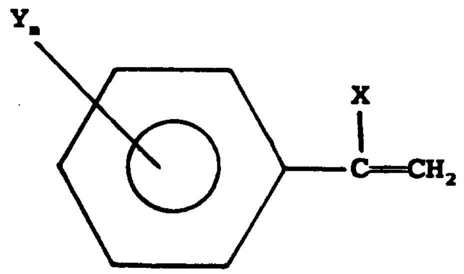

(VI)

wherein:

- X represents a hydrogen atom or an alkyl radical having from 1 to 4 carbon atoms;
- Y represents a hydrogen or a halogen atom or an alkyl radical having from 1 to 4 carbon atoms and
- m is 0 or an integer comprised between 1 and 5.

Examples of vinylaromatic compounds having the above-reported general formula are: styrene; methylstyrene; mono-, di-, tri-, tetra-, and penta-chlorostyrene and the corresponding α-methyl-styrenes; styrenes and α-methylstyrenes which are alkylated in the nucleus such as ortho- and para-methylstyrenes; ortho- and para ethylstyrenes; ortho- and para-methyl-α-methylstyrenes, etc. These compounds can be utilized either alone or in admixture with one another.

For the objects of the present invention it is understood that during the preparation of the rubbery polymeric modifier by the polymerization grafting method, not all the vinyl aromatic compound makes a polymer grafted on the olefinic elastomer, but, partially, it makes a free polymer which is present in physical admixture with the grafted copolymer.

The amount of vinylaromatic polymer really grafted on the olefinic elastomer is not critical and, generally, ranges from 10 to 50% by weight with respect to the grafted copolymer; while the amount of free vinylaromatic polymer ranges from 10 to 50% by weight with respect to the total weight of the rubbery polymeric modifier. The amounts of grafted vinylaromatic polymer and of the free vinylaromatic polymer, respectively, can be determined by extraction of the rubbery modifier by a solvent in which only the free polymer is soluble.

Preferably, the average molecular weight of the grafted vinylaromatic polymer favourably influences the impact strength characteristics of the mixtures. Thus, for example, good impact strength results are obtained with vinylaromatic polymers having a molecular weight higher than 100,000 and up to 2,000,000.

More preferred are those vinylaromatic polymers having a molecular weight comprised between 900,000 and 1,300,000.

The amount of the further polymeric additive can be up to 100 and, preferably, from 2 to 100 parts by weight with respect to 100 parts by weight of the (A) + (B) mixture. Particularly, when the additive is a rubbery polymeric modifier, it is preferable that its amount be comprised between 2 and 50 parts by weight with respect to the sum of the two components (A) and (B). Amounts lower than 2 parts by weight have a negligible effect on the impact strength of the compositions; while, amounts higher than 50 parts by weight strongly improve the impact strength, but to the detriment of other properties. Thus, particularly preferred compositions are those wherein the rubbery plymeric modifier is present in amounts comprising between 5 and 30 parts by weight, always referred to the sum of the components (A) and (B).

In addition to the above-specified components, the compositions of the present invention can contain reinforcing additives such as, for example, glass fibres, carbon fibres, organic and inorganic high-modulus fibres, metal fibres, inorganic fillers, etc., as well as antiflame agents, dyestuffs, pigments, stabilizers, lubricants, etc., which are well-known to those skilled in the art.

Particularly preferred reinforcing additives are the glass fibres, which can be untreated or, better, treated with silanes or titanates, as it is well-known to the technicians and to the manufacturers of said fibres.

The reinforcing additives can be used in amounts generally not exceeding 50% by weight and, preferably, not higher than 30% by weight calculated on the total composition.

Suitable stabilizers to be used in the compositions of the present invention comprise many of the known thermal stabilizers and antioxidants which are suitable and generally utilized for polyamides, polyphenylene

ether resins and/or elastomers. For example, liquid phosphates and hindered phenols can be added to the compositions of the present invention, in amounts which can range from 0.05 to 5% by weight with respect to the total composition.

The method for producing the compositions of the present invention is not critical and any conventional method can be utilized.

Generally, the mixing is carried out in the molten state, and times and temperatures are selected and determined time-to-time as a function of the composition. The temperatures are generally in the range of from 200 to 300 C. Any known mixing apparatus can be utilized. The method can be continuous or discontinuous. Specifically, single-screw and two-screw extruders, inner mixers Banbury type, mixing rollers and the like can be used.

Although all the composition components can be introduced at the beginning and directly into the mixing unit, in some cases it is preferable to completely or partially pre-mix one of the two resins (A) or (B), preferably polyphenylene ether, with the optional further polymeric additive.

The compositions subject matter of the present invention are easily processable by injection molding or by extrusion and exhibit a complex of properties which make them suited to be utilized for the manufacture of shaped articles having a high impact strength along with a good thermal stability and a reduced water sensitivity. Thanks to these properties, the compositions of the present invention find use in the automotive sector, for the manufacture of articles which can be furnace-painted, parts which enter into contact with motors, houshold electric apparatus, electronic articles and technical articles, generally in the form of cups, boxes, containers, panels, sheets, rods, etc.

In order to better understand the present invention and to reduce it to practice, a few illustrative examples are given hereinafter, which however are not limitative of the scope of the invention.

The characterization of the compositions as reported in the examples, was carried out according to the following methods and standards:

- Impact resistance (IZOD), determined at 23°C, according to standard ASTM D 256, on 3.2 mm thick specimens with notch.
- Softening temperature or VICAT, determined at 5 kg in oil, according to standard ISO 306.
- "Melt Flow Index" (MFI), determined at 270°C with a weight of 10 Kg, according to standard ASTM D-1238.

In the preparation of the compositions reported in the following examples, use was made of polymeric additives constituted by rubbery polymeric modifiers having the following tradenames:
KRATON G-1701$^R$, polystyrene-poly(ethylene-propylene) di-block rubbery copolymer of the Shell company, having a (styrene)/(ethylene-propylene) ratio equal to 37/63;
VECTOR 6201-D$^R$, polystyrene-polybutadiene-polystyrene threeblock rubbery copolymer of the Exxon Company, having a (styrene)/(butadiene) ratio equal to 29/71; POLIGUM 1122$^R$, poly(methylmethacrylate-butadiene-styrene) linear copolymer of the Polichem Company.

EXAMPLE 1

Preparation of the polyamide-6 in the presence of MDI

840 g of epsilon caprolactam (CPL), 120 g of a solution (maitained at 110 °C) at 20% by weight of 4,4'-methylenediphenylediisocyanate (MDI) in CPL and 40 g of a solution at 20% by weight of sodiun epsilon-caprolactamate in CPL were introduced into a lined vessel, heated at 150 °C by thermostatic circulation and equipped with a stirrer and bottom release. The polymerization reaction was carried out for 10 minutes under stirring. A polymer solid at room temperature, constituted by polyamide-6 having an average molecular weight of 20,000 g/mol and an intrinsic viscosity $h_{intr.}$ = 3 dl/g, was obtained.

EXAMPLE 2

Preparation of the polyamide-6 in the presence of HDI

A polyamide was prepared in the same way and with the same reactants described in preparation 1, but by using epsilon-caprolactam blocked with hexamethylenediisocyanate (HDI) instead of with MDI, as polymerization initiator. The molar ratios of the monomer, initiator and catalyst were the same as in the preparation 1. At the end, a polyamide-6 having an average molecular weight of 21,000 was obtained.

EXAMPLE 3

Into a BRABENDER plastograph, equipped with a 50 ml cell and heated at 240 °C, there was introduced a mixture, prepared at room temperature, consisting of:

- 70% by weight of poly(2,6-dimethyl-1,4-phenylen)ether (PPE) having an intrinsic viscosity of 0.47 dl/g measured in chloroform at 23 °C;
- 30% by weight of an elastomer grafted with styrene (EPDM-g-PST) having the following composition: 40% by weight of EPDM (Mooney viscosity 62-72 ML at 100 °C and a iodine number 18), 28% by weight of grafted styrene and 32% by weight of styrene in the form of homopolymer, having a weight average molecular weight (Mw) 1,119,000, blended with said rubber.

The BRABENDER mastication speed was programmed according to a cycle of 50-120-50 r.p.m. and the residence time of the mixture in the plastograph was of 4 minutes.

A mixture consisting of the following components was then fed to a second plastograph BRABENDER of the same type as the first one and used in the same operative conditions:

- 33.3% by weight of the mixture leaving the first plastograph constituted by 70% of poly(2,6-dimethyl-1,4-phenylene)ether premixed with 30% of EPDM-g-PST;
- 41% by weight of polyamide-6 obtained as above described in preparation 1, and
- 25.7% by weight of poly(2,6-dimethyl-1,4-phenylene)ether.

The resulting composition was ground, compression molded at 260 °C and characterized.

The characterization results are listed in Table 1 together with the total composition of the mixture.

EXAMPLE 4

A mixture was prepared consisting of the same components and by using the same processing conditions described in example 1, except that KRATON G-1701[R] rubber was used instead of EPDM-g-PST modifier.

The mixture thus obtained was ground, compression molded at 260 °C and characterized. The characterization results are listed in Table 1 together with the total composition of the mixture.

EXAMPLES 5 and 6

Two mixtures were prepared consisting of the same components and by using the same process modalities reported in example 1, except that VECTOR 6201-D[R] and POLIGUM 1122[R] rubbers respectively were used instead of EPDM-g-PST modifier.

The mixtures thus obtained were ground, compression molded at 260 °C and characterized. The characterization results are listed in Table 1 together with the total composition of the mixtures.

EXAMPLE 7

A mixture was prepared consisting of the same components and by using the same processing conditions described in example 1, by using, instead of the anionic polyamide obtained according to preparation 1, the one obtained according to preparation 2, during this preparation epsilon-caprolactam blocked with HDI, instead of with MDI, was used.

The mixture thus obtained was ground, compression molded at 260 °C and characterized. The characterization results are listed in Table 1 together with the total composition of the mixture.

EXAMPLE 8 (comparison test)

A composition was prepared by using the same components and proportions and the same processing conditions of example 1, by using, instead of the anionic polyamide, Nylon 6 produced by MONTEDIPE S.r.l. Company with trademark "TERNIL[R] B27", having an average molecular weight of 18,000.

The composition thus obtained was ground, compression molded at 260 °C and characterized. The characterization results are listed in Table 1.

TABLE 1:

| EXAMPLES | 3 | 4 | 5 | 6 | 7 | 8 |
|---|---|---|---|---|---|---|
| PPE (%) | 49 | 49 | 49 | 49 | 49 | 49 |
| POLYAMIDE-6 (%) | 41 | 41 | 41 | 41 | 41 | 41* |
| KRATON G-1701$^R$(%) | -- | 10 | -- | -- | -- | -- |
| EPDM-g-PST (%) | 10 | -- | -- | -- | 10 | 10 |
| VECTOR 6201-D$^R$ (%) | -- | -- | -- | 10 | -- | -- |
| POLIGUM 1122$^R$ (%) | -- | -- | 10 | -- | -- | -- |
| VICAT (5 Kg) (°C) | 173 | 174 | 182 | 173 | 176 | 178 |
| IZOD (J/m) | 398 | 640 | 173 | 561 | 109 | 28 |
| MFI (g/min) | -- | 15,5 | -- | -- | -- | 59 |

* Polyamide TERNIL B27

## Claims

1. A thermoplastic composition having an excellent balance of mechanical and thermal properties, an improved impact strength, a good flowability in the molten state and a good processability, comprising:
   - at least a polyphenylene ether resin (A);
   - at least a modified polyamide (B) obtained by anionic polymerization of a omega-lactam in the presence of an organic diisocyanate, and, optionally,
   - a further polymeric additive.

2. The thermoplastic composition according to claim 1, wherein the polyphenylene ether resin (A) is present in an amount ranging between 5 and 95% by weight and, correspondingly, the polyamide (B) is present in an amount comprised between 95 and 5% by weight, with respect to the total weight of the two components (A) and (B).

3. The thermoplastic composition according to claims 1 and 2, wherein the polyphenylene ether resin (A) is present in an amount comprised between 25 and 75 parts by weight with respect to 100 parts by weight of (A) + (B), and the polyamide is present in an amount comprised between 75 and 25 parts by weight with respect to 100 parts by weight of (A) + (B).

4. The thermoplastic composition according to anyone of the preceding claims, wherein the polyamide (B) is prepared by anionic polymerization of a mixture comprising:
   - at least a omega-lactam (i),
   - an alkaline catalyst (ii), and
   - an organic diisocyanate (iii).

5. The thermoplastic composition according to claim 4, wherein the omega-lactam (i) is a compound corresponding to the following formula (III):

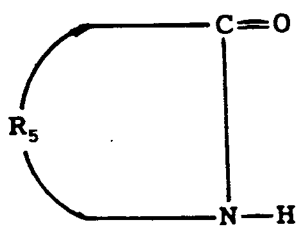

(III)

wherein $R_5$ is an alkylene radical containing from 2 to 18, preferably from 4 to 12, carbon atoms.

6. The thermoplastic composition according to claims 4 and 5, wherein the omega-lactam is selected from the group consisting of delta-valerolactam, epsilon-caprolactam, omega-undecanelactam and omega-lauryllactam and mixtures thereof.

7. The thermoplastic composition according to anyone of the preceding claims, wherein the organic diisocyanate (iii) is an aliphatic, cycloaliphatic or aromatic compound having the following general formula (IV):

$OCN-R_6-NCO$

wherein $R_6$ is an alkylene, cycloalkylene, alkylcycloalkylene, arylene, alkylarylene or arylalkylene group having from 2 to 30 carbon atoms.

8. The thermoplastic composition according to claim 7, wherein the organic diisocyanate (iii) has both the -NCO groups blocked by reaction with a omega-lactam.

9. The thermoplastic composition according to claims 7 and 8, wherein the organic diisocyanate (iii) is selected from the group consisting of 2,4'- and 4,4'-(diphenylemethane)diisocyanate (MDI), 2,4- and 2,6-toluenediisocyanate (TDI), hexamethylenediisocyanate or mixtures thereof.

10. The thermoplastic composition according to anyone of the preceding claims, wherein the organic diisocyanate (iii) is used in amounts comprised between 0.1 and 5%, preferably between 0.5 and 3% by moles with respect to the total moles of omega-lactam.

11. The thermoplastic composition according to anyone of the preceding claims from 4 to 10, wherein the alkaline catalyst (ii) is selected among the sodium or potassium salts of the omega-lactam (i) or a mixture thereof.

12. The thermoplastic composition according to anyone of the preceding claims, wherein the polyamide (B) has a molecular weight comprised between 15,000 and 40,000, a melting point higher than 200 °C and a content of residual monomer lower than 2% by weight.

13. The thermoplastic composition according to claim 12, wherein the polyamide (B) is obtained by anionic polymerization, carried out between 100 and 250 °C, of epsilon-caprolactam in the presence of 4,4'-diphenylmethanediisocyanate having both the -NCO groups blocked with epsilon-caprolactam and by using sodium or potassium caprolactamate as catalyst.

14. The thermoplastic composition according to anyone of the preceding claims, wherein the polyphenylene ether resin is a polymer having the following formula (II):

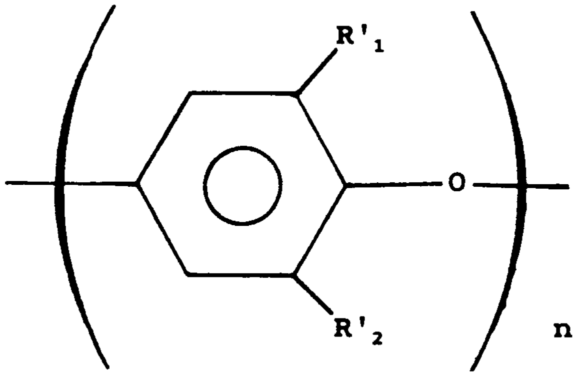

(II)

wherein $R'_1$ and $R'_2$, independently from each other, represent an alkyl radical containing from 1 to 4 carbon atoms and "n" is at least 50 and preferably comprised between 60 and 600.

**15.** The thermoplastic composition according to claim 14, wherein the polyphenylene ether is poly(2,6-dimethyl-1,4-phenylene)ether having a number average molecular weight ranging from 5,000 to 120,000 and an inherent viscosity higher than 0.1 dl/g and, preferably comprised between 0.30 and 0.90 dl/g (measured in chloroform at 23°C).

**16.** The thermoplastic composition according to anyone of the preceding claims, wherein the further polymeric additive is a rubbery polymeric modifier.

**17.** The thermoplastic composition according to claim 16, wherein the amount of the rubbery polymeric modifier is comprised between 5 and 50 parts by weight with respect to 100 parts by weight of (A) and (B) mixture.

**18.** The thermoplastic composition according to anyone of the preceding claims, wherein the rubbery polymeric modifier is a poly(methylmethacrylate-butadiene-styrene) linear copolymer.

**19.** The thermoplastic composition according to claims 16 or 17, wherein the rubbery polymeric modifier is a (vinylaromatic polymer)-(conjugated polydiene) block polymers of A-B or A-B-A types in the hydrogenated, partially hydrogenated or not-hydrogenated form.

**20.** The thermoplastic composition according to claim 16 or 17, wherein the rubbery polymeric modifier is an olefinic elastomer containing a vinylaromatic polymer grafted thereon.

**21.** The thermoplastic composition according to claim 20, wherein the olefinic elastomer is an ethylene-propylene-non conjugated diene terpolymer, having a diene content ranging from 2 to 20% by weight and, preferably, from 8 to 18% by weight, and having, furthermore, a Mooney viscosity, determined at 100°C, ranging from 30 to 90 ML, and a iodine number higher than 5, preferably ranging from 10 to 40.

**22.** The thermoplastic composition according to claims 20 and 21, wherein the vinylaromatic polymer is partially grafted on the olefinic elastomer, and, partially, it is free in physical admixture with the grafted copolymer.

**23.** The thermoplastic composition according to claim 22, wherein the molecular weight of the vinylaromatic polymer is higher than 100,000 and up to 2,000,000.

**24.** The thermoplastic composition according to claim 23, wherein the molecular weight of the vinylaromatic polymer is comprised between 900,000 and 1,300,000.

**25.** The thermoplastic composition according to anyone of the preceding claims, containing in addition reinforcing additives, antiflame agents, dyestuffs, pigments, stabilizers, and/or lubricants.

**26.** The thermoplastic composition according to claim 25, wherein the reinforcing additive is selected from the group consisting of glass fibres, carbon fibres, organic or inorganic high modulus fibres, or metal fibres, in amounts not exceeding 50% by weight and, preferably, not higher than 30% by weight, calculated on the total composition.

European Patent Office

# EUROPEAN SEARCH REPORT

Application Number

EP 93 20 0983

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-0 528 477 (ECP ENICHEM POLIMERI) * page 3, line 36 - page 5, line 17; claims; examples * | 1-26 | C08L77/02 C08L71/12 C08L77/00 |
| D,A | EP-A-0 211 201 (GENERAL ELECTRIC COMPANY) * page 9, line 14 - page 10, line 16; claims 1-6,8,9; examples * | 1-16 | |
| A | EP-A-0 451 563 (ECP ENICHEM POLIMERI) * claims * | 1-26 | |
| A | EP-A-0 390 189 (MONTEDIPE) * claims; examples * | 1,4-13 | |
| A | DE-A-4 102 996 (BAYER AG) * page 4, line 1 - line 42; claims 1-10 * | 1-26 | |
| | | | **TECHNICAL FIELDS SEARCHED (Int. Cl.5 )** |
| | | | C08L |

The present search report has been drawn up for all claims

| Place of search | Date of completion of the search | Examiner |
|---|---|---|
| BERLIN | 01 SEPTEMBER 1993 | BOEKER R. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document